# FASCICULE DE BREVET EUROPEEN

(11) **EP 3 797 468 B1**
(45) Date de publication et mention de la délivrance du brevet: **01.11.2023**
(21) Numéro de dépôt: 19722647.5
(22) Date de dépôt: 13.05.2019
(51) Int. Cl.: H02K 3/51

(54) **CAGE POUR ROTOR BOBINÉ DE MACHINE ELECTRIQUE SYNCHRONE**
KÄFIG EINES GEWICKELTEN LÄUFERS EINER SYNCHRONEN ELEKTROMASCHINE
CAGE FOR A WOUND ROTOR IN A SYNCHRONOUS ELECTRIC MACHINE

(30) Priorité: 22.05.2018 FR 1854258
(43) Date de publication de la demande: 31.03.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: TAVAKOLI, Shahab, 92420 VAUCRESSON (FR); DELL AGNESE, Anthony, 95100 ARGENTEUIL (FR); FRABOLOT, Ferdinand, 75010 PARIS (FR)
(74) Mandataire: Renault Group
(86) Numéro de dépôt international: PCT/EP2019/062219
(87) Numéro de publication internationale: WO 2019/224036

(56) Documents cités:
- FR-A- 1 454 211
- FR-A1- 2 602 103
- GB-A- 2 210 512
- US-A- 4 075 522
- US-A1- 2009 015 084

## Description

La présente invention se rapporte à un rotor de machine électrique synchrone.

Dans le domaine des machines électriques synchrones (connues en anglais sous le nom de *electrically excited synchronous machines, abrégé en EESM*), on connaît deux types de rotor : les rotors ferromagnétiques et les rotors bobinés.

Les rotors bobinés présentent d'importantes qualités en termes de commandabilité et de rendement.

Toutefois les rotors bobinés présentent une fabrication relativement complexe et impliquant un grand nombre de pièces.

On connaît notamment le brevet FR3043509 A1, décrivant un système de refroidissement d'un rotor bobiné. Dans ce document, le rotor bobiné comprend un corps rotorique, deux couronnes pour maintenir les bobinages au niveau des chignons, des tirants de maintien des couronnes et des cales d'encoches pour refermer les encoches recevant les bobinages.

Cependant, une telle structure de rotor bobiné est relativement longue à assembler et présente une industrialisation relativement difficile.

Le document FR1454211 décrit un rotor avec des cales d'encoches sous formes de demi-bandes reliées à deux bagues d'extrémité du rotor, destinées à protéger les bobinages du rotor.

Le document FR2602103 décrit un dispositif annulaire comportant des cales d'encoches destiné à être monté sur un rotor.

Le document GB2210512 décrit une armature annulaire avec des extensions destinées à être insérées entre les pôles d'un rotor. Ces extensions permettent d'assurer la connexion électrique des bobinages.

Aussi, il existe le besoin d'une structure de rotor bobiné plus simple à fabriquer et à industrialiser.

On propose une cage pour rotor bobiné de machine électrique selon la revendication 1, ledit rotor bobiné comprenant un corps présentant une alternance de dents et d'encoches, lesdites encoches étant destinées à recevoir une partie d'un bobinage rotorique, ladite cage étant adaptée pour être montée autour du corps du rotor bobiné.

Ladite cage comprend une première partie et une deuxième partie destinées à être solidarisée l'une à l'autre, chaque partie comprenant une couronne d'extrémité et une pluralité circonférentielle de tiges s'étendant depuis ladite couronne d'extrémité parallèlement à l'axe de révolution de la couronne d'extrémité, chaque tige présentant une portion principale et une portion d'extrémité, et pour chaque tige de ladite première partie, la portion d'extrémité de ladite tige est conformée pour pouvoir être solidarisée à la portion d'extrémité d'au moins une tige complémentaire de la deuxième partie lorsque les deux parties sont installées chacune à une extrémité longitudinale du corps de rotor, de sorte que lesdites deux tiges complémentaires solidarisées forment une cale d'encoche s'étendant entre les deux couronnes d'extrémité des deux parties de la cage.

Ainsi, on peut obtenir une cage faite de deux parties, relativement simple à assemble sur le rotor, et permettant à la fois d'assurer le maintien des têtes de bobines, par les couronnes de maintien, et les fonctions de tirant de maintien des têtes et de cales d'encoches par les tiges solidarisées de chaque partie.

Ainsi, on peut obtenir un ensemble rotorique relativement simple, robuste, de faible coût d'obtention et d'installation relativement rapide.

Avantageusement et de manière non limitative, lesdites tiges associées solidarisées l'une à l'autre sont soudés à leurs portions d'extrémité respectives. Ainsi on peut obtenir une fixation des tiges l'une à l'autre relativement robuste et présentant un relativement faible coût de réalisation.

Avantageusement et de manière non limitative, chaque tige de la première partie peut être solidarisée à l'une quelconque des tiges de la deuxième partie. Ainsi on peut obtenir une installation encore plus rapide, car la position angulaire d'une partie par rapport à l'autre est indifférente pour le montage.

Avantageusement, chaque portion principale de tige présente une section droite sensiblement en triangle isocèle, dont la base présente une forme incurvée sensiblement concave, et dont la hauteur s'étend selon une direction sensiblement radiale par rapport à la couronne d'extrémité associée. Ainsi, on peut obtenir, après solidarisation des tiges des deux parties, des cales d'encoches, formant aussi tirants, de forme relativement robustes et fiables.

Avantageusement, au moins deux tiges complémentaires présentent chacune une portion d'extrémité d'épaisseur réduite par rapport à la portion principale, et présentant une forme sensiblement de prisme droit à base rectangulaire, dont une face de base s'étend dans le prolongement de ladite portion principale et l'autre face de base présentant une forme de languette. Ainsi, les portions d'extrémité présentent une forme relativement simple à obtenir. En outre cette forme particulière des portions d'extrémité permet d'associer deux parties de cage obtenues d'un même moule, car la mise en regard des deux parties permet la jonction des portions d'extrémités des tiges des deux parties.

Avantageusement et de manière non limitative, les portions d'extrémités desdites tiges complémentaires sont conformée pour permettre la mise en contact desdites languettes respectives et solidariser lesdites languettes respectives en contact. Ainsi, la solidarisation, par exemple le soudage, des tiges sur les languettes permet d'assurer que les bobinages sont maintenus à distance lors des opérations de solidarisation, ce qui peut éviter une dégradation involontaire des bobinages, par exemple par chauffage excessif ou par destruction mécanique involontaire.

Avantageusement et de manière non limitative, chaque partie est faite d'un alliage d'aluminium, et lesdits segments sont traités de manière à présenter une isolation électrique superficielle. Ainsi, on peut obtenir des cales d'encoches permettant en outre de s'affranchir des classiques papiers isolants électriques généralement installés entre les cales d'encoches et les bobinages. Autrement dit les tiges ainsi traitées, permettent une fois solidarisées de réaliser les fonctions de tirants, cales d'encoches et isolant électrique.

Avantageusement et de manière non limitative, le traitement d'isolation superficielle comprend une opération d'anodisation dure. Ce traitement permet en particulier d'isoler électriquement et thermiquement les tiges des parties formant cales d'encoche.

L'invention concerne aussi un ensemble rotorique comprenant un rotor bobiné et une cage telle que décrite précédemment.

L'invention concerne aussi une machine électrique comprenant un stator et un ensemble rotorique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1 est une vue schématique d'un corps de rotor connu de l'art antérieur ;
- la figure 2 est une vue en perspective d'une cage selon un mode de réalisation de l'invention;
- la figure 3 est une vue schématique d'une partie de cage selon le mode de réalisation de la figure 2 ;
- la figure 4 est une vue de détail de la jonction entre deux portions d'extrémité de deux tiges des deux parties de cage selon le mode de réalisation de la figure 2 ; et
- la figure 5 est une vue en coupe de la cage selon le mode de réalisation de la figure 2.

Une machine électrique, ici une machine électrique synchrone, comprend un ensemble rotorique comprenant un rotor 1 bobiné et une cage 20 installée autour du rotor ; l'ensemble rotorique étant monté dans un stator, non représenté.

Le rotor 1 bobiné présente un axe de rotation s'étendant dans une direction dite longitudinale X représentée sur le trièdre XYZ.

Le rotor 1 est traversé dans le sens de la longueur X par un arbre de transmission, non représenté.

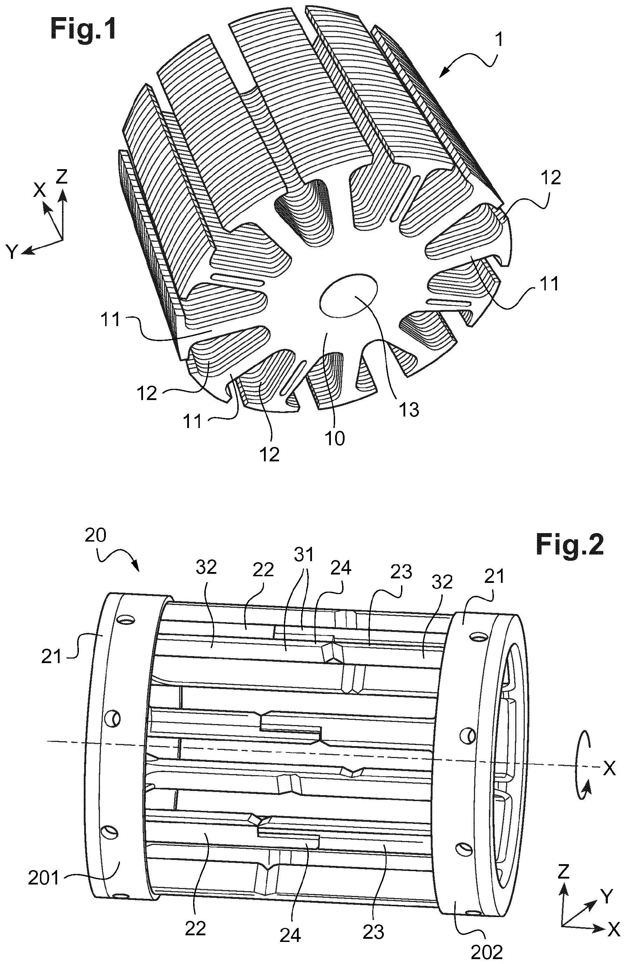

En référence à la figure 1, le rotor est formé d'un corps 10 en matériau magnétique, connu sous le terme anglophone de *stack,* qui peut être aussi considéré comme le coeur du rotor. Ce stack est généralement composé d'un empilement de couches de tôle.

Le stack 1 définit une alternance circonférentielle de dents 11 et d'encoches 12.

Les encoches 12 s'étendent entre deux dents 11 adjacentes, et forment un évidement s'étendant sur toute la longueur X du rotor, entre les deux dents adjacentes 11.

Les dents 11 s'étendent radialement depuis le centre 13 du stack 1 et sur toute la longueur du rotor.

Chaque dent 11 reçoit un bobinage longitudinal destiné à générer un pôle rotorique. Le bobinage est enroulé autour de la dent 11.

Chaque bobinage définit à chaque extrémité longitudinale du rotor une tête de bobine.

Les têtes de bobines sont en saillie à chaque extrémité longitudinale X du rotor et forment à chaque extrémité un chignon.

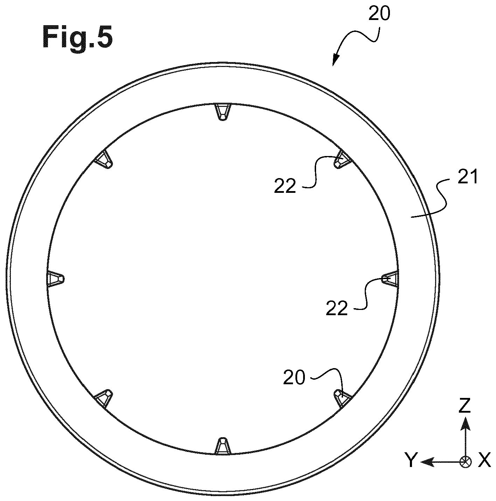

En référence aux figures 2 à 5 l'ensemble rotorique comprend une cage 20 destinée à être installée autour du rotor 1 lorsque les bobinages sont installés autour des dents 11 du rotor 1.

La cage 20 est faite de deux parties 201, 202 séparées.

Les deux parties 201, 202 sont faites en métal, dans ce mode de réalisation en aluminium.

Chaque partie 201, 202 est dans ce mode de réalisation obtenue d'une seule pièce, par exemple moulée, mais peut résulter d'un assemblage de pièces par exemple par soudage.

Chaque partie 201, 202 est assemblée avant d'être installée sur le rotor 1. Seule la solidarisation de la première partie 201 avec la deuxième partie 202 est réalisée directement sur le rotor 1.

Chaque partie 201, 202 présente une forme générale sensiblement cylindrique, adaptée pour être installée autour du rotor 1 depuis une extrémité longitudinale du rotor 1.

Chaque partie 201, 202 comprend une couronne d'extrémité 21 destinée à s'engager autour d'une extrémité longitudinale du rotor 1 de sorte à former un maintien des têtes de bobines.

Lors du montage de la cage 20, la première partie 201 est engagée à une première extrémité longitudinale du rotor 1 tandis que la deuxième partie 202 est engagée à la deuxième extrémité longitudinale du rotor 1, les deux parties 201, 202 se rejoignant sensiblement au milieu du rotor 1, selon la direction longitudinale du rotor, de sorte à pouvoir être solidarisées l'une à l'autre.

Ainsi, les deux couronnes d'extrémité 21 sont opposées longitudinalement l'une à l'autre par rapport au stack 1.

Chaque partie 201, 202 comprend une pluralité de tiges 22, 23 s'étendant parallèlement à l'axe de révolution de la couronne d'extrémité 21 associée, et par conséquent sensiblement parallèlement à l'axe de rotation du rotor 1 quand la partie 201, 202 est installée sur le rotor 1.

Les tiges 22, 23 sont réparties de manière sensiblement régulièrement de manière circonférentielle sur la couronne, de sorte à s'étendre longitudinalement sur le rotor, lorsque la partie 201, 202 correspondante est montée sur le rotor 1.

La répartition circonférentielle des tiges est adaptée pour permettre l'insertion au moins partielle des tiges dans les encoches 12 du rotor 1 lorsque la partie 201, 202 correspondante est installée sur le rotor 1.

Les tiges 22, 23 sont dimensionnées en longueur de sorte que la tige 22 de la première partie 201 atteigne et puisse être solidarisée à la tige 23 de la deuxième partie 202 lorsqu'elles sont montées autour du rotor 1.

Chaque tige 22, 23 présente une portion principale 32 et une portion d'extrémité 31.

Chaque tige 22 de la première partie 201 est destinée à être solidarisée sur sa portion d'extrémité 31 à la portion d'extrémité 31 d'une tige 23 de la deuxième partie 202.

En particulier, les tiges 22 de la première partie 201 sont solidarisées par soudage aux tiges 23 de la deuxième partie 202, bien que la technique de solidarisation puisse varier en fonction par exemple du matériau employé.

La portion principale 32 de chaque tige 22, 23 présente une section droite sensiblement en triangle isocèle, dont la base 220 présente une forme incurvée sensiblement concave, et dont la hauteur s'étend selon une direction sensiblement radiale par rapport à la couronne d'extrémité 21 associée.

La portion d'extrémité 31 présente une longueur comprise entre 1/8 et ½ de la longueur de la portion principale 32, ici une longueur de sensiblement 1/3 de la portion principale 32.

La portion d'extrémité 31 s'étend dans le prolongement de la portion principale 32, autrement dit en partageant une même direction d'extension longitudinale X.

La portion d'extrémité 31 présente une épaisseur réduite par rapport à la portion principale 32.

Ici la jonction entre la portion d'extrémité 31 et la portion principale 32 forme un épaulement 312.

La portion d'extrémité 31 présente une forme sensiblement de prisme droit à base rectangulaire, dont une face de base 221 s'étend dans le prolongement de d'un côté de la portion principale adjacent à la base 220 et l'autre face de base 222 présentant une forme de languette.

L'autre face de base 222 en forme de languette correspond ici à une zone de soudage 222.

Ainsi la face de base 222 d'une première tige 22 de la première extrémité 201 est destinée à être mise en contact avec la face de base 222 d'une autre tige 23 de l'autre partie 202 de sorte à permettre le soudage des portions d'extrémités 31 l'une à l'autre.

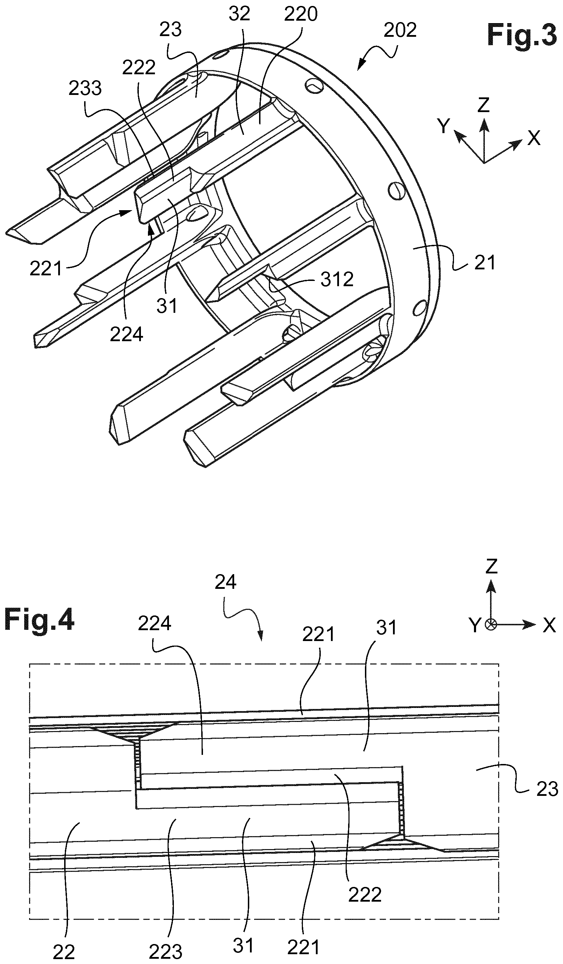

En référence aux figures 3 et 4, les languettes 222 formant zone de soudage correspondent à une face de faible superficie et s'étendant longitudinalement à distance des bords radiaux 223, 224 des tiges 22, 23. Ceci permet notamment de réaliser les soudures tout en restant sensiblement éloigné des bobinages, ce qui limite l'échauffement des bobinages et un endommagement potentiel.

En particulier les languettes 222 s'étendent longitudinalement sensiblement à mi-distance entre deux bords radiaux 223, 224 de la tige 22, 23 associée
Dans ce mode de réalisations les deux parties 201, 202 sont sensiblement identiques, et les portions d'extrémités sont réalisées de sorte que lorsque la première partie 201 est mise en regard de la deuxième partie 202, notamment lorsqu'elles sont toutes deux installées autour du rotor 1, les zones de soudage 222 des différentes tiges 22, 23 sont associées en regard et en contact deux à deux de sorte à permettre le soudage de chaque tige 22 de la première partie 201 avec une autre tige 23 de la deuxième partie 202.

Autrement dit, les deux parties 201 et 202 sont sensiblement identiques, par exemple issues d'un même moule, et conformées de sorte que lorsqu'une partie 202 est pivotée de 180° par rapport à l'autre, pour être engagée à l'autre extrémité du rotor 1, ces deux parties 201, 202 forment deux parties complémentaires aptes à être solidarisées.

Toutes les tiges 22 de la première partie 201 sont sensiblement identiques, et toutes les tiges 23 de la deuxième partie 202 sont sensiblement identiques.

Ainsi, chaque tige 22 de la première partie 201 peut être associée à l'une quelconque des tiges 23 de la deuxième partie 202. De la sorte, les deux parties 201, 202 peuvent être installées autour du rotor 1, chaque tige s'engageant au moins partiellement dans une encoche 12, mais sans autre contrainte quant à l'orientation angulaire des deux parties 201, 202.

Dans ce mode de réalisation on procède au soudage de l'ensemble des tiges 22 de la première partie 201 aux tiges 23 correspondantes de la deuxième partie 202. Toutefois selon une alternative, on peut prévoir de ne souder qu'une partie des tiges 22, par exemple pour réduire le nombre de points de soudure.

Lorsque les deux parties 201, 202 sont soudées l'une à l'autre, ou solidarisées selon tout autre moyen adapté, les tiges 22 et 23 des deux parties 201 et 202 forment un ensemble de cales d'encoches 24 s'étendant entre les deux couronnes de maintien 21.

Ainsi, la cage 20 formée par la solidarisation des deux parties 201, 202 autour du rotor 1 permet à la fois d'assurer un maintien des têtes de bobines par les couronnes de maintien 21, et les cales d'encoches 24 formées permettent à la fois d'assurer le maintien radial des bobinages dans les encoches, mais assure aussi la fonction de tirant de fixation des couronnes de maintien 21 dans la direction longitudinale.

En outre, les deux parties 201, 202, en particulier les tiges 22, 23 des deux parties 201, 202 sont traitées de manière à être isolées électriquement.

Ainsi, les cales d'encoches 24 formées peuvent remplir la fonction d'isolant électrique assurée classiquement dans l'art antérieur par des papiers isolants installés entre les cales et les bobinages.

Afin d'assurer cette isolation, dans ce mode de réalisation, on traite les tiges en aluminium par un procédé d'anodisation dure. Un tel procédé permet en outre, lorsqu'il recouvre les parties 201 et 202, ou au moins les tiges 22, 23 des parties 201, 202, d'assurer une bonne résistance à l'usure, et d'agir en relativement bon isolant thermique et électrique.

Selon une mise en oeuvre du procédé d'anodisation dure sur chaque partie 201, 202, on sait qu'une couche de 50µm permet d'obtenir une résistance de la couche d'environ 500 Vickers.

En outre un tel traitement surfacique peut être adapté pour réduire la rugosité de surface des cales d'encoche 24 formées et en conséquence réduire le coefficient de frottement entre la cale d'encoche 24 et la bobine installée. Ainsi, on peut insérer de manière plus simple les tiges 22, 23 formant cales d'encoche 24 dans les encoches.

L'invention n'est toutefois pas limitée à ce procédé d'isolation et toute technique de traitement d'isolation électrique surfacique ou superficielle peut être employée. Ainsi, aucun papier d'isolation n'a à être mis en place, ce qui permet d'optimiser le temps de montage de l'ensemble rotorique.

Selon une alternative dans laquelle les tiges 22, 23 sont faites d'un matériau isolant, par exemple un matériau plastique, aucun traitement d'isolation de surface n'est alors nécessaire.

## Revendications

1. Cage (20) pour rotor bobiné de machine électrique, ledit rotor (1) bobiné comprenant un corps (10) présentant une alternance de dents (11) et d'encoches (12), lesdites encoches (12) étant destinées à recevoir une partie d'un bobinage rotorique, ladite cage (20) étant adaptée pour être montée autour du corps (10) du rotor bobiné (1),
où ladite cage (20) comprend une première partie (201) et une deuxième partie (202) destinées à être solidarisée l'une à l'autre, chaque partie (201, 202) comprenant une couronne d'extrémité (21) et une pluralité circonférentielle de tiges (22, 23) s'étendant depuis ladite couronne d'extrémité (21) parallèlement à l'axe de révolution (X) de la couronne d'extrémité (21), chaque tige (22, 23) présentant une portion principale (32) et une portion d'extrémité (31), et pour chaque tige (22) de ladite première partie (201), la portion d'extrémité (31) de ladite tige (22) est conformée pour pouvoir être solidarisée à la portion d'extrémité (31) d'au moins une tige complémentaire (23) de la deuxième partie (202) lorsque les deux parties (201, 202) sont installées chacune à une extrémité longitudinale du corps (10) de rotor (1), de sorte que lesdites deux tiges complémentaires (22, 23) solidarisées forment une cale d'encoche (24) s'étendant entre les deux couronnes d'extrémité (21, 22) des deux parties (201, 202) de la cage (20), chaque portion principale (32) de tige (22, 23) présentant une section droite sensiblement en triangle isocèle, dont la base (220) présente une forme incurvée sensiblement concave, et dont la hauteur s'étend selon une direction sensiblement radiale par rapport à la couronne d'extrémité (21) associée, et
où au moins deux tiges (22, 23) complémentaires présentent chacune une portion d'extrémité (31) d'épaisseur réduite par rapport à la portion principale (32), et présentent une forme sensiblement de prisme droit à base rectangulaire, dont une face de base s'étend dans le prolongement de ladite portion principale (32) et l'autre face de base présente une forme de languette.

2. Cage (20) selon la revendication 1, **caractérisé en ce que** lesdites tiges associées (22, 23) solidarisées l'une à l'autre sont soudés à leurs portions d'extrémité (31) respectives.

3. Cage (20) selon la revendication 1 ou 2, **caractérisé en ce que** chaque tige de la première partie (201) peut être solidarisée à l'une quelconque des tiges (22) de la deuxième partie (202).

4. Cage (20) selon la revendication 1, **caractérisé en ce que** les portions d'extrémités (31) desdites tiges complémentaires (22, 23) sont conformées pour permettre la mise en contact desdites languettes respectives et solidariser lesdites languettes respectives en contact.

5. Cage (20) selon l'une quelconque des revendications 1 à 4, **caractérisé en ce que** chaque partie (201, 202) est faite d'un alliage d'aluminium, et **en ce que** lesdits segments (22) sont traités de manière à présenter une isolation électrique superficielle.

6. Cage (20) selon la revendication 5, **caractérisé en ce que** le traitement d'isolation superficielle comprend une opération d'anodisation dure.

7. Ensemble rotorique comprenant un rotor (1) bobiné et une cage (20) selon l'une quelconque des revendications 1 à 6.

8. Machine électrique comprenant un stator et un ensemble rotorique selon la revendication 7.

## Patentansprüche

1. Käfig (20) für einen gewickelten Rotor einer elektrischen Maschine, wobei der gewickelte Rotor (1) einen Körper (10) mit einem Wechsel von Zähnen (11) und Nuten (12) umfasst, wobei die Nuten (12) dazu bestimmt sind, einen Abschnitt einer Rotorwicklung aufzunehmen, wobei der Käfig (20) geeignet ist, um den Körper (10) des gewickelten Rotors (1) herum montiert zu sein,
wobei der Käfig (20) einen ersten Abschnitt (201) und einen zweiten Abschnitt (202) umfasst, die dazu bestimmt sind, fest miteinander verbunden zu sein, wobei jeder Abschnitt (201, 202) eine Endkrone (21) und eine umlaufende Mehrzahl von Stäben (22, 23) umfasst, die sich von der Endkrone (21) parallel zur Umdrehungsachse (X) der Endkrone (21) erstrecken, wobei jeder Stab (22, 23) einen Hauptteil (32) und einen Endteil (31) aufweist und für jeden Stab (22) des ersten Abschnitts (201) der Endteil (31) des Stabs (22) dazu ausgebildet ist, mit dem Endteil (31) wenigstens eines komplementären Stabs (23) des zweiten Abschnitts (202) fest verbunden sein zu können, wenn die zwei Abschnitte (201, 202) jeweils an einem Längsende des Körpers (10) des Rotors (1) angebracht sind, so dass die zwei fest verbundenen komplementären Stäbe (22, 23) einen Nutenkeil (24) bilden, der sich zwischen den zwei Endkronen (21, 22) der zwei Abschnitte (201, 202) des Käfigs (20) erstreckt, wobei jeder Hauptteil (32) des Stabs (22, 23) einen geraden Querschnitt im Wesentlichen in Form eines gleichschenkeligen Dreiecks aufweist, dessen Basis (220) eine im Wesentlichen konkave gekrümmte Form aufweist und dessen Höhe sich in einer im Wesentlichen radialen Richtung im Verhältnis zur zugehörigen Endkrone (21) erstreckt, und
wobei wenigstens zwei komplementäre Stäbe (22, 23) jeweils einen Endteil (31) mit verringerter Dicke im Verhältnis zum Hauptteil (32) aufweisen und im Wesentlichen eine Form eines geraden Prismas mit rechteckiger Basis aufweisen, dessen eine Grundfläche sich in der Verlängerung des Hauptteils (32) erstreckt und die andere Grundfläche eine Laschenform aufweist.

2. Käfig (20) nach Anspruch 1, **dadurch gekennzeichnet, dass** die fest miteinander verbundenen zugehörigen Stäbe (22, 23) an ihren jeweiligen Endteilen (31) verschweißt sind.

3. Käfig (20) nach Anspruch 1 oder 2, **dadurch gekennzeichnet, dass** jeder Stab des ersten Abschnitts (201) mit einem beliebigen der Stäbe (22) des zweiten Abschnitts (202) fest verbunden sein kann.

4. Käfig (20) nach Anspruch 1, **dadurch gekennzeichnet, dass** die Endteile (31) der komplementären Stäbe (22, 23) dazu ausgebildet sind, das Inkontaktbringen der jeweiligen Laschen zu ermöglichen und die jeweiligen in Kontakt stehenden Laschen fest zu verbinden.

5. Käfig (20) nach einem der Ansprüche 1 bis 4, **dadurch gekennzeichnet, dass** jeder Abschnitt (201, 202) aus einer Aluminiumlegierung hergestellt ist, und dadurch, dass die Segmente (22) so behandelt sind, das sie eine oberflächliche elektrische Isolierung aufweisen.

6. Käfig (20) nach Anspruch 5, **dadurch gekennzeichnet, dass** die oberflächliche Isolierungsbehandlung einen Arbeitsgang des Hartanodisierens umfasst.

7. Rotoranordnung umfassend einen gewickelten Rotor (1) und einen Käfig (20) nach einem der Ansprüche 1 bis 6.

8. Elektrische Maschine umfassend einen Stator und eine Rotoranordnung nach Anspruch 7.

## Claims

1. Cage (20) for a wound rotor of an electric machine, said wound rotor (1) comprising a body (10) having an alternation of teeth (11) and slots (12), said slots (12) being intended to receive a part of a rotor winding, said cage (20) being designed to be mounted about the body (10) of the wound rotor (1), wherein said cage (20) comprises a first part (201) and a second part (202) that are intended to be secured to one another, each part (201, 202) comprising an end ring (21) and a circumferential plurality of rods (22, 23) extending from said end ring (21) parallel to the axis (X) of revolution of the end ring (21), each rod (22, 23) having a main portion (32) and an end portion (31), and, for each rod (22) of said first part (201), the end portion (31) of said rod (22) is shaped so as to be able to be secured to the end portion (31) of at least one complementary rod (23) of the second part (202) when the two parts (201, 202) are each installed at a longitudinal end of the body (10) of the rotor (1), such that said two secured complementary rods (22, 23) form a slot wedge (24) extending between the two end rings (21, 22) of the two parts (201, 202) of the cage (20), each main portion (32) of rod (22, 23) having a cross section substantially in the shape of an isosceles triangle, the base (220) of which has a substantially concave curved shape, and of which the height extends in a substantially radial direction relative to the associated end ring (21), and wherein at least two complementary rods (22, 23) each have an end portion (31) of reduced thickness relative to the main portion (32), and have a substantially right prism shape with a rectangular base, of which one base face extends in the extension of said main portion (32) and the other base face has a tab shape.

2. Cage (20) according to Claim 1, **characterized in that** said associated rods (22, 23) secured to one another are welded at their respective end portions (31) .

3. Cage (20) according to Claim 1 or 2, **characterized in that** each rod of the first part (201) may be secured to any one of the rods (22) of the second part (202).

4. Cage (20) according to Claim 1, **characterized in that** the end portions (31) of said complementary rods (22, 23) are shaped so as to allow the placing in contact of said respective tabs and to secure said respective tabs in contact.

5. Cage (20) according to any one of Claims 1 to 4, **characterized in that** each part (201, 202) is made from an aluminium alloy, and **in that** said segments (22) are treated so as to have a surface electrical insulation.

6. Cage (20) according to Claim 5, **characterized in that** the surface insulation treatment comprises a hard anodizing operation.

7. Rotor assembly comprising a wound rotor (1) and a cage (20) according to any one of Claims 1 to 6.

8. Electric machine comprising a stator and a rotor assembly according to Claim 7.
